# EUROPÄISCHE PATENTSCHRIFT

(11) **EP 0 616 822 B1**
(45) Veröffentlichungstag und Bekanntmachung des Hinweises auf die Patenterteilung: **27.12.1996**
(21) Anmeldenummer: 94103741.8
(22) Anmeldetag: 11.03.1994
(51) Int. Cl.: B01D 15/08, C02F 1/28

(54) **Verfahren zum Betrieb eines Adsorbers und Einrichtung zur Durchführung des Verfahrens**
Process for operating an adsorber and device for performing the process
Procédé d'utilisation d'un adsorbeur et installation pour la réalisation du procédé

(30) Priorität: 19.03.1993 AT 548/93
(43) Veröffentlichungstag der Anmeldung: 28.09.1994
(73) Patentinhaber: Weingartner, Andreas, Dipl.-Ing., A-1090 Wien (AT)
(72) Erfinder: Weingartner, Andreas, Dipl.-Ing., A-1090 Wien (AT)
(74) Vertreter: Hefel, Herbert, Dipl.-Ing.

(56) Entgegenhaltungen:
- EP-A- 0 333 257
- DE-B- 1 442 928
- US-A- 2 487 574
- US-A- 4 155 846

## Beschreibung

Die Erfindung bezieht sich auf ein Verfahren zum Betrieb eines Adsorbers, insbesondere eines Aktivkohleadsorbers zur selektiven Adsorption von Stoffen aus wäßrigen Lösungen, insbesondere zur Wasseraufbereitung, wobei der Adsorber ein Adsorbergehäuse aufweist mit mindestens einer Zuflußöffnung und mindestens einer Abflußöffnung für das zu reinigende Medium und das Adsorbergehäuse die aus Aktivkohle bestehende Schüttung volumsfüllend aufnimmt, sowie auf einen Adsorber zur Durchfuhrung dieses Verfahrens.

Aktivkohleadsorber werden verwendet u.a. zur selektiven Adsorption von Mikroverunreinigungen bei der Aufbereitung von Trinkwasser. Verunreinigtes Wasser beinhaltet nicht nur organische Mikroverunreinigungen (OM) wie Kleinmolekulare, synthetisch hergestellte organische Verbindungen im Nano- bis Mikrogrammbereich, denen eine den menschlichen Organismus schädigende Wirkung zugeordnet wird (beispielsweise Pestizide, Chlorierte Kohlenwasserstoffe), sondern auch großmolekulare, zumeist natürlich vorkommende organische Verbindungen im Milligrammbereich, welchen keine schädigende Wirkung zugeordnet wird (beispielsweise Huminsäuren), die ebenfalls zum Teil von der Aktivkohle aufgenommen werden und welche nachfolgend als organische Hintergrundmatrix (Background Organic Matter - BOM) bezeichnet wird. Wenn organische Mikroverunreinigungen (OM) und BOM gleichzeitig an die Oberfläche eines Aktivkohlekornes gelangen, so steht den beiden Substanzgruppen gleichermaßen eine begrenzte Anzahl von Adsorptionsplätzen mit unterschiedlicher Adsorptionsenergie zur Verfügung. Aufgrund der geringeren Molekülgröße diffundieren die Organischen Mikrovereinigungen sofort an die Kornoberfläche und in das Korn hinein und besetzen dort die Plätze hoher Adsorptionsenergie; der BOM kann aufgrund der Größe der Moleküle (schlechte Diffusionseingenschaften) nicht so schnell in das Korn gelangen und wird daher in der Flüssigkeit durch das Adsorbensmaterial weitertransportiert.

Die BOM-Moleküle gelangen in der Folge in tiefere Adsorberbereiche, wo sie bei immer geringer werdender Konkurrenzierung trotz ihrer schlechten Diffusionseigenschaften immer besser adsorbieren können. Dort nehmen sie Plätze sehr hoher Adsorptionsenergie ein. Außerdem blockieren sie die Poreneingänge mechanisch, so daß die erst viel später in diese Adsorbertiefe gelangenden Organischen Mikroverunreinigungen z.T. nicht mehr in die Poren gelangen können bzw. nicht genügend Adsorptionsenergie zur Verdrängung der adsorbierten großen BOM-Moleküle aufbringen können. Die Beladungskapazität für die Organischen Mikroverunreinigungen wird daher mit zunehmender Adsorbertiefe immer kleiner und nimmt um den Faktor 10 bis 100 ab. Typischerweise wird das so bezeichnete Carbon Fouling schon nach einigen Tagen relevant wirksam und bewirkt nach einigen Wochen eine starke Verminderung der Kohlekapazität.

Diese Erkenntnisse über die Auswirkungen der unterschiedlichen Diffusions- und Adsorptionscharakteristika der konkurrierenden Stoffe und Stoffgruppen werden in der Praxis in der Weise benutzt, daß in ein großvolumiges Adsorbergehäuse eine Schichte Aktivkohle eingebracht wird von geringer Höhe, die dann mit dem zu reinigenden Wasser beaufschlagt wird. Auf diese Schichte werden dann in zeitlicher Folge hintereinander immer wieder neue Schichten aufgebracht, bis das Adsorbergehäuse zur Gänze angefüllt ist. Dadurch wird zwar die Reinigungskapazität besser genutzt, da mehrere Adsorberschichten geringer Mächtigkeit sukzessive hintereinander beaufschlagt werden und es daher nicht zu einer Vorbeladung der einzelnen Schichten mit organischen Substanzen über einen längeren Zeitraum kommen kann. Als Nachteil ist allerdings zu weiten, daß der Betrieb des Adsorbers jeweils beim Erreichen einer Maximalkonzentration in einer Schichte der Schüttung zum Einbringen einer neuen Schichte Aktivkohle unterbrochen werden muß und daher ein automatisierter, kontinuierlicher Betrieb des Adsorbers nicht realisierbar ist. Denkbar wäre lediglich eine technisch aufwendige Vorrichtung zur automatisierten chargenweisen Einbringung der Aktivkohle.

Die Erfindung zielt nun darauf ab, ein Verfahren vorzuschlagen, mit dem ein Adsorber der genannten Art durch einen längeren Zeitraum hindurch ohne Unterbrechung betrieben werden kann, was erfindungsgemäß durch jene Maßnahmen gelingt, die Inhalt und Gegenstand des kennzeichnenden Teiles des Patentanspruches 1 sind.

Der Adsorber zur Durchführung dieses Verfahrens ist gekennzeichnet durch die in den Ansprüchen 2 bis 12 geoffenbarten Maßnahmen.

Anhand von Abbildungen wird die Erfindung näher erläutert, ohne sie auf die dargestellte Ausführungsforme einzuschränken. Es zeigen:

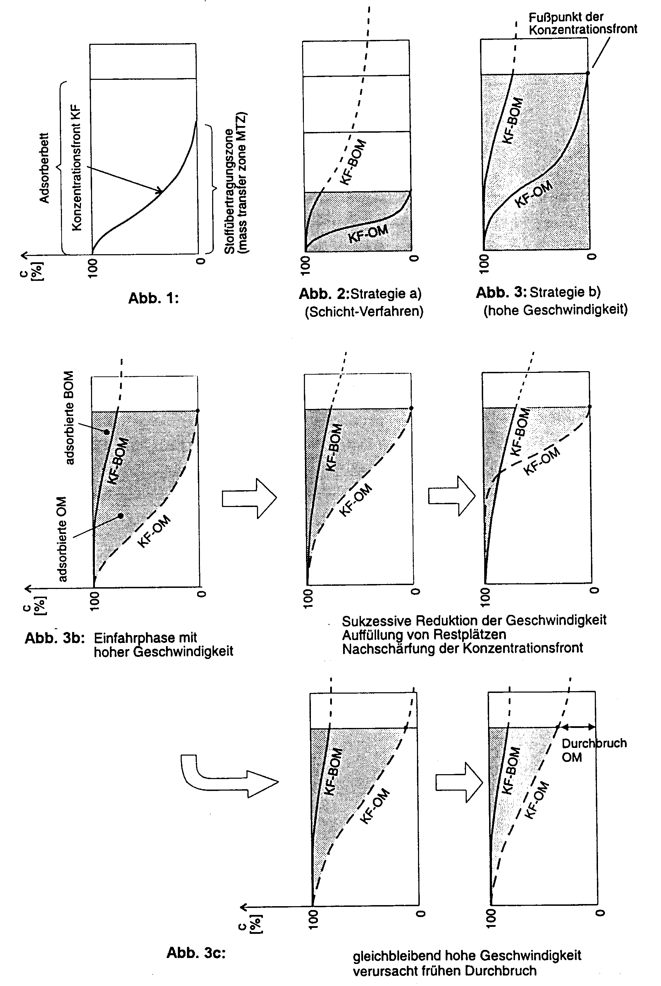

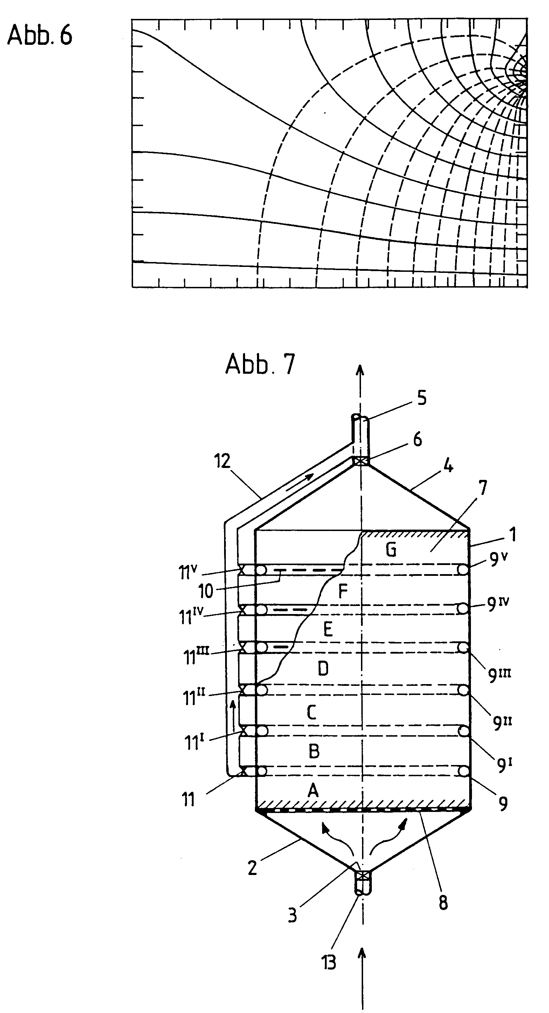

Die Abbildungen 1 bis 6 verschiedene Diagramme zur Erläuterung des Adsorptionsvorganges; Abb. 7 einen erfindungsgemäßen Adsorber im Längsschnitt in einer ersten Ausführungsform.

Der Bereich im Adsorber, innerhalb dessen die Substanzen an die Aktivkohle adsorbieren bzw. die Stoffkonzentration von eingangs 100% auf 0 zurückgeht, wird als Stoffübertragungszone bezeichnet. Die Länge dieses Bereiches hängt u.a. von der Diffusionsgeschwindigkeit der Stoffmoleküle sowie von der Fließgeschwindigkeit ab. Bedingung für die vollständige Adsorption von Organischen Mikroverunreinigungen ist, daß sich die Stoffübertragungszone innerhalb des Adsorberbettes befindet (Abb. 1). Als Konzentrationsfront wird der Konzentrationsverlauf innerhalb der Stoffübertragungszone bezeichnet.

Wird durch entsprechende verfahrenstechnische Einrichtungen das Konkurrenzgleichgewicht zugunsten einer Stoffgruppe (z.B. der Organischen Mikroverunreinigungen) und zuungunsten einer anderen Stoffgruppe (z.B. des BOM) verschoben, kann von selektiver Adsorption gesprochen werden.

Es sind in der Praxis grundsätzlich zwei Strategien zur Erreichung selektiver Adsorptionsverhältnisse möglich:
- Verkürzung des Adsorberbettes, indem in ein großvolumiges Adsorbergehäuse eine Schichte Adsorbensmaterial von geringer Höhe eingebracht wird, die dann mit dem zu reinigenden Wasser beaufschlagt wird. Die Schichthöhe muß so groß sein, daß die Stoffübertragungszone der Organischen Mikroverunreinigungen noch vollständig im Bereich der Schichte untergebracht ist, die BOM-Stoffübertragungszone jedoch nur noch zu einem geringen Teil untergebracht ist und daher die gedachte BOM-Stoffübertragungszone über die Schichte hinausragt. (Abb. 2, LUCA-Verfahren; Stand der Technik). Sobald jeweils die zu eliminierenden Substanzen im Schichtablauf auftreten und also nicht mehr ausreichend adsorbiert werden, werden in zeitlicher Reihenfolge immer wieder neue Schichten aufgebracht, bis das Adsorbergehäuse zur Gänze angefüllt ist. Dadurch wird zwar die Reingigungskapazität besser genutzt, da mehrere Adsorberschichten geringer Mächtigkeit sukzessive hintereinander beaufschlagt werden und es daher nicht zu einer Vorbeladung (Carbon-Fouling) der einzelnen Schichten mir organischen Substanzen über einen längeren Zeitraum kommen kann. Als Nachteil ist allerdings zu werten, daß der Betrieb des Adsorbers bis jeweils zum Aufbringen einer neuen Schichte unterbrochen werden muß und daher ein kontinuierlicher, automatisierter Betrieb des Adsorbers nicht realisierbar ist. Denkbar wäre lediglich eine technisch aufwendige Vorrichtung zur automatisierten chargenweisen Einbringung der Aktivkohle.
- Erhöhung der Fließgeschwindigkeit bei einem ungeteilten Adsorber so weit, bis die flache BOM-Konzentrationsfront möglichst weit über das Adsorberbett hinausragt, die Konzentrationsfront der Organischen Mikroverunreinigungen jedoch gerade noch im Adsorberbett untergebracht ist (Abb. 3). In der Folge müßte jedoch die Fließgeschwindigkeit sukzessive verlangsamt werden, so daß sich der Fußpunkt der Konzentrationsfront der Organischen Mikroverunreinigungen immer am Bettende befindet und nicht die Stoffübertragungszone der Organischen Mikroveiunreinigungen dieses verläßt (Abb. 3b). Ansonsten würde ein unwirtschaftlich früher Durchbruch der Organischen Mikroverunreinigungen stattfinden (Abb. 3c). Die Verfahrensweise (Abb. 3b) ist im praktischen Anlagenbetrieb jedoch nicht möglich, da der Durchsatz konstant gehalten werden muß. Angestrebt wird in jedem Fall eine möglichst kurze bzw. steile Konzentrationsfront für die Organischen Mikroverunreinigungen sowie eine möglichst lange bzw. flache Konzentrationsfront für den BOM.

Zweck des erfindungsgemäßen Verfahrens ist die Schaffung idealer Randbedingungen für die selektive Adsorption von Organischen Mikroverunreinigungen mittels einer kontinuierlichen Erhöhung der Fließgeschwindigkeit entlang des Fließweges durch Einflußnahme auf die Adsorberhydraulik. Weiters kann mit Hilfe dieses Verfahrens ein solcher Adsorber über einen längeren Zeitraum ohne Unterbrechung betrieben werden. Der hiezu verwendete Adsorber besitzt ein (Abb. 7) im Längsschnitt zylindrisches Adsorbergehäuse 1 mit einem kegeligen Boden 2, in dessen Mittelbereich die Zuflußöffnung 3 vorgesehen ist. Abgeschlossen wird das Adsorbergehäuse 1 nach oben durch einen konischen Deckel 4, an den eine Abflußleitung 5 anschließt, die über ein Ventil 6 zu- bzw. abgeschaltet werden kann. Die Schüttung 7 aus Aktivkohle liegt auf einem Filterboden 8 auf, der als Lochblech ausgestaltet ist und mit Distanz oberhalb der Zuflußöffnung 3 angeordnet ist. Diese Schüttung 7 füllt das Adsorbergehäuse 1 möglichst zur Gänze aus. An der Innenseite des Gehäuses 1 sind in vorzugsweise gleichen vertikalen Abständen Rohrringe 9ⁿ festgelegt, deren Außendurchmesser etwa dem Innendurchmesser des Adsorbergehäuses 1 entspricht. In diesen Rohren sind, über deren Oberfläche gleichmäßig verteilt, eine Vielzahl von Abflußöffnungen 10 vorgesehen, die in der Zeichnung angedeutet sind. Jeder dieser Rohrringe 9ⁿ ist über ein Ventil 11ⁿ oder eine Klappe mit einer außenliegenden Sammelleitung 12 verbunden, die ihrerseits in die oben erwähnte Abflußleitung 5 mündet. Die einzelnen Rohrringe 9ⁿ sind in vertikaler Richtung in gleichen Abständen voneinander distanziert und unterteilen dadurch die Schüttung 7 in einzelne, übereinanderliegende Schüttungssektoren A - G (Bereiche).

Das Adsorbergehäuse 1 ist als Druckkessel ausgelegt, beispielsweise mit einem Durchmesser von 2600 mm, für einen Durchsatz von ca. 20 Liter pro Sekunde. Das zu reinigende Medium (Wasser) wird über das Zuflußrohr 13 eingeleitet und wird über den Filterboden 8 auf den gesamten Gehäusequerschnitt verteilt. Das Medium wird zunächst über den untersten Rohrring 9 abgezogen. Beim Erreichen der zulässigen maximalen Konzentration der Störsubstanzen im abfließenden Medium wird durch Betätigung des diesem Rohrring 9 zugeordneten Ventiles 11 (Schließung des Ventils) auf den in vertikaler Richtung nächstfolgenden Rohrring 9' umgeschaltet. Dieser Vorgang wiederholt sich von Rohrring zu Rohrring, bis die Schüttungsoberkante in ca. 3 m Höhe erreicht ist, welche wiederum frei durchströmt wird. Damit wird bei Erreichen der zulässigen Konzentration im Adsorberablauf die gesamte Adsorberschüttung gleichmäßig durchströmt. Die Dimensionierung der Rohrringe 9ⁿ bzw. der Abflußöffnungen 10 wird so gewählt, daß durch eine entsprechende Querschnittsverengung die Durchflußgeschwindigkeit von anfangs ca. 13 m pro Stunde kontinuierlich bis zum Entnahmequerschnitt auf etwa 100 m pro Stunde zunimmt. Die Abstände der Rohrringe 9ⁿ betragen etwa die Hälfte bis 1/5 des Adsorberinnendurchmessers, deren Durchmesser liegt bei 5 bis 15 cm. Die Summe der Querschnittsfläche der Abflußöffnungen 10 eines Rohrringes beträgt etwa 1/5 bis 1/20 des Querschnittes der Schüttung. Wesentlich für die Dimensionierung und damit die Form des Strömungsbildes ist ein von Fall zu Fall unterschiedliches optimales Verhältnis zwischen Adsorberquerschnittsfläche, Austrittsfläche und Abstand der Rohrringe (Sektorhöhe). Dieses Verhältnis hängt in erster Linie vom Konzentrationsverhältnis Störstoffe / großmolekulare organische Substanzen ab.

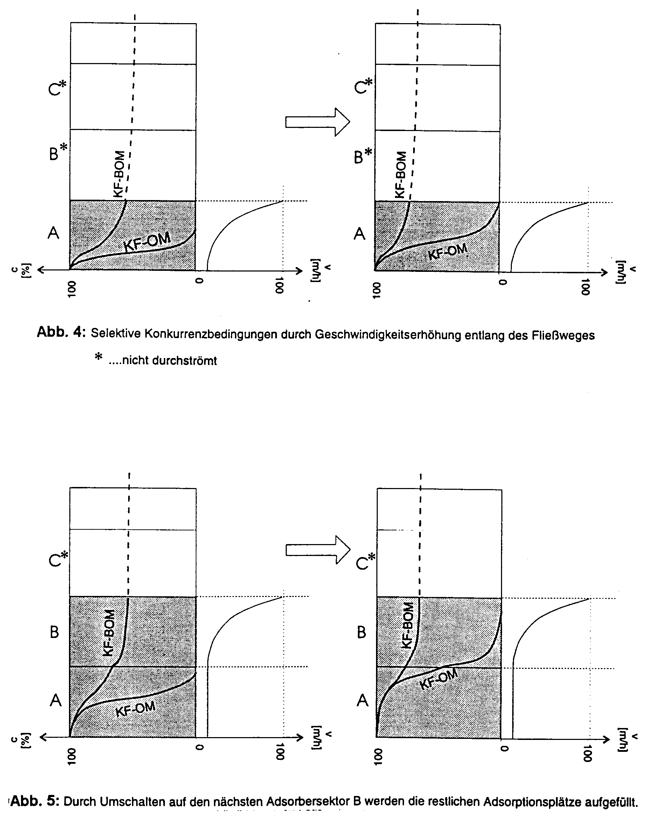

Durch diese Vorrichtungen wird ein mittleres Geschwindigkeitsprofil angestrebt, wie es in Abb. 4 erkennbar ist. Am Bettanfang, bei Normalgeschwindigkeit (Vollquerschnittsgeschwindigkeit), sind die Organischen Mikroverunreinigungen noch konkurrenzstark, da sie gleichzeitig mit dem BOM und in höherer Konzentration auftreten. Mit zunehmendem Fließweg wird jedoch die Konzentration der Organischen Mikroverunreinigungen immer geringer und daher das Carbon Fouling immer stärker wirksam. Mit abnehmender Konzentration der Organischen Mikroverunreinigungen entlang des Fließweges bzw. entlang der Stoffübertragungszone sollte sich die Fließgeschwindigkeit sukzessive erhöhen, um die Adsorption des BOM entgegen der zunehmenden Bindungsenergie der verfügbaren Adsorptionsplätze immer mehr zu erschweren, dessen Konzentrationsfront zu verflachen und damit das Carbon Fouling zu minimieren (Abb. 4).

Diese Verfahrensweise ist dann sinnvoll, wenn bei Durchbruch der Organischen Mikroverunreinigungen die Fließgeschwindigkeit reduziert wird. Dies wird erreicht, indem auf den nächsten Abzug umgeschalten wird (Abb. 5). Damit ist der gesamte Bereich der ersten Schichte (Bereich) mit der geringeren Normalgeschwindigkeit durchströmt (Abb. 5); die Stoffübertragungszonen wandern etwas zurück und die Konzentrationsfronten werden wieder etwas steiler, die restlichen Plätze werden - vorrangig von Organischen Mikroverunreinigungen - aufgefüllt. Dieser Vorgang wiederholt sich je nach Anzahl der Schichten (Bereich) bis zur Erreichung der Oberkante des Adsorberbettes.

Auch eine kontinuierliche oder schrittweise (diskrete) Verringerung der Fließgeschwindigkeit in der ersten Schichte bzw. kontinuierliche oder schrittweise Erhöhung der Fließgeschwindigkeit in der nächsten Schichte ist durch kontinuierliches oder schrittweises Zudrehen des ersten Ventils bei gleichzeitigem kontinuierlichen oder schrittweisen Zudrehen des nächsten Ventils möglich.

Das besprochene Ausführungsbeispiel (Abb. 7) besitzt einen Zulauf für das zu reinigende Medium und eine Vielzahl von Abflußöffnungen, die über die Oberfläche des Adsorbergehäuses verteilt sind und die in zeitlicher Aufeinanderfolge zu- bzw. abgeschaltet werden. Eine weitere Möglichkeit zur Realisierung der Erfindung liegt darin, sowohl mehrere Zulauföffnungen wie auch mehrere Abflußöffnungen vorzusehen und diese über die jeweiligen steuerbaren Ventile oder Klappen einander im Sinne dieser Erfindung zuzuschalten und zuzuordnen. Beide Ausführungsbeispiele weisen Rohre bzw. Rohrringe auf, in welchen die Abflußöffnungen ausgespart sind. Grundsätzlich ist es denkbar, diese Abflußöffnungen unmittelbar in der Kesselwand anzuordnen und außen liegende Sammelrinnen und Sammelrohre an der Behälterwand festzulegen.

Die Ventile oder Klappen, die hier programmgesteuert sind, werden u.a. von einer Sonde beeinflußt, deren Meßwert als Steuergröße dient und die den Reinheitsgrad des abfließenden Mediums ermittelt.

Abb. 6 veranschaulicht ein Beispiel für ein Strömungsbild (rotationssymmetrisch). Die Abbildung entspricht einem Vertikalschnitt durch eine beliebige rechte Adsorberschicht(Bereich)-Hälfte. Strömungslinien sind strichliert, Potentiallinien durchgezogen abgebildet. Die Abflußöffnung 10 befindet sich rechts oben.

Dank des erfindungsgemäßen Vorschlages ist es möglich, entlang des Fließweges in der Schüttung einzelne Sektoren derselben hintereinander zu beaufschlagen, wodurch ein kontinuierlicher, ungestörter und automatisierbarer Betrieb ermöglicht wird, dabei wird eine höhere Kohleausnutzung bei niedrigeren laufenden Kosten erzielt. Die kontinuierliche Erhöhung der Fließgeschwindigkeit des Mediums entlang des Fließweges im Einzugsbereich der Abflußöffnungen durch die kleiner werdenden Fließquerschnitte ermöglicht eine bessere Ausnutzung der Aktivkohle, weil Mikroverunreinigungen mit guten Diffusionseigenschaften im Bereich höherer Fließgeschwindigkeit noch adsorbieren können, wogegen die großmolekularen organischen Substanzen weitgehend durchbrechen und im Ablaufwasser verbleiben.

## Patentansprüche

1. Verfahren zum Betrieb eines Adsorbers, insbesondere eines Aktivkohleadsorbers zur selektiven Adsorption von Stoffen aus wäßrigen Lösungen, insbesondere zur Wasseraufbereitung, wobei der Adsorber ein Adsorbergehäuse aufweist mit mindestens einer Zuflußöffnung und mindestens einer Abflußöffnung für das zu reinigende Medium und das Adsorbergehäuse die aus Aktivkohle bestehende Schüttung volumsfüllend aufnimmt, dadurch gekennzeichnet, daß das Medium über die Zuflußseite des Adsorbergehäuses in zeitlich aufeinanderfolgenden Abschnitten durch innerhalb des Gehäuses in Durchflußrichtung des Mediums räumlich aufeinanderfolgende Bereiche der Schüttung geleitet wird und dabei die Fließgeschwindigkeit des Mediums jeweils in den einzelnen räumlich aufeinanderfolgenden Bereichen der Schüttung zwischen dem jeweiligen Eintritt in diesen Bereich und der Ableitung aus diesem Bereich nach außen im wesentlichen kontinuierlich vergrößert wird, wobei durch die diesem letzterwähnten Bereich jeweils vorgelagerten, gleichzeitig durchströmten Bereiche der Schüttung das Medium mit im wesentlichen konstanter Fließgeschwindigkeit geleitet wird.

2. Adsorber, insbesondere Aktivkohleadsorber, bestehend aus einem Adsorbergehäuse (1) mit mindestens einer Zuflußöffnung (3) und mindestens einer Abflußöffnung für das zu reinigende Medium, wobei das Adsorbergehäuse die aus Aktivkohle bestehende Schüttung volumsfüllend aufnimmt zur Durchführung des Verfahrens nach Anspruch 1, dadurch gekennzeichnet, daß das Adsorbergehäuse (1) mindestens eine ventilbestückte Zuflußöffnung (3) aufweist und mehrere Gruppen von Abflußöffnungen (10) vorgesehen sind, wobei jede Gruppe aus mehreren, auf einer horizontalen Ebene über den Umfang des Adsorbergehäuses (1) verteilten Abflußöffnungen (10) besteht und die Gruppen voneinander in vertikalen Abständen distanziert sind, wobei jeder Gruppe von Abflußöffnungen (10) ein Ventil (11ⁿ) zugeordnet ist und die Abflußquerschnittsfläche eines jeden Bereiches einen Bruchteil der Querschnittsfläche der Schüttung beträgt, wobei das Verhältnis zwischen 1 : 5 und 1 : 20 liegt, wodurch die Durchflußgeschwindigkeit entlang des Durchflußweges auf das 5- bis 20fache der Vollquerschnitts-Geschwindigkeit ansteigt.

3. Adsorber nach Anspruch 2, dadurch gekennzeichnet, daß das Adsorbergehäuse (1) in seinem Bodenbereich die Zulauföffnung (3) aufweist und oberhalb des Bodenbereiches und voneinander in vertikalen Abständen distanziert mehrere Abflußöffnungen (10) vorgesehen sind, welche über steuerbare Ventile (11ⁿ) in eine gemeinsame Abflußleitung (5) münden.

4. Adsorber nach Anspruch 2 oder 3, dadurch gekennzeichnet, daß in übereinander liegenden horizontalen Ebenen am oder im Adsorbergehäuse (1) mehrere über den Umfang des Adsorbergehäuses verteilte Abflußöffnungen (10) vorgesehen sind und die einer horizontalen Ebene zugeordneten Abflußöffnungen (10) über eine ventilbestückte Sammelleitung (12) mit der Abflußleitung (5) verbunden sind.

5. Adsorber nach Anspruch 3 oder 4, dadurch gekennzeichnet, daß die Abflußöffnungen (10) in Rohrringen (9ⁿ) vorgesehen sind und im Adsorbergehäuse mehrere Rohrringe (9ⁿ) in vertikaler Richtung übereinander und voneinander distanziert angeordnet sind.

6. Adsorber nach einem der Ansprüche 2 bis 5, dadurch gekennzeichnet, daß die einer horizontalen Ebene zugeordneten Abflußöffnungen (10) bzw. Rohrringe (9ⁿ) in vertikaler Richtung um etwa gleiche Abstände voneinander distanziert sind.

7. Adsorber nach Anspruch 5, dadurch gekennzeichnet, daß der Außendurchmesser der Rohrringe (9ⁿ) etwa dem Innendurchmesser des Adsorbergehäuses (1) entspricht und die Rohrringe (9ⁿ) an der Wandung des Adsorbergehäuses festgelegt sind.

8. Adsorber nach einem der Ansprüche 2 bis 7, dadurch gekennzeichnet, daß die Ventile (11ⁿ, 17) programmgesteuert sind.

9. Adsorber nach einem der Ansprüche 2 bis 8, dadurch gekennzeichnet, daß in der Abflußleitung (5) für das Medium eine dessen Reinheit messende Sonde angeordnet ist und die Sonde im Steuerkreis der Ventile (11ⁿ, 17) liegt.

10. Adsorber nach einem der Ansprüche 2 bis 9, dadurch gekennzeichnet, daß die Höhe der aufeinanderfolgenden Bereiche der Schüttung einen Bruchteil des Durchmessers der Schüttung und somit des Adsorberinnendurchmessers beträgt, wobei das Verhältnis der Höhe der einzelnen Bereiche und dem Adsorberinnendurchmesser zwischen 1 : 2 und 1 : 5 liegt.

11. Adsorber nach einem der Ansprüche 2 bis 10, dadurch gekennzeichnet, daß die Schüttung auf einem oberhalb der Zuflußöffnung (3) und von dieser distanziert angeordneten, als Lochblech ausgebildeten Filterboden (8) aufliegt und die Umfangskontur des Filterbodens (8) hinsichtlich Größe und Umfang dem Querschnitt des Adsorbergehäuses (1) entspricht.

## Claims

1. A method of operating an adsorber, in particular an activated carbon adsorber for the selective adsorption of substances from aqueous solutions, in particular for water treatment, the adsorber having an adsorber housing with at least one feed opening and at least one discharge opening for the medium to be cleaned, and the entire volume of the adsorber housing being filled with the charge of activated carbon, characterised in that via the feed side of the adsorber housing, the medium is conveyed in chronologically successive portions through charge regions located one after the other within the housing in the through-flow direction of the medium, and in the process the flow speed of the medium is increased substantially continuously in each of the individual, successive charge regions between entry into this region and discharge from this region to the outside, the medium being conveyed at a substantially constant flow speed through the charge regions which are located in front of this last-mentioned region in each case and have medium through-flow simultaneously with this region.

2. An adsorber, in particular an activated carbon adsorber, consisting of an adsorber housing (1) with at least one feed opening (3) and at least one discharge opening for the medium to be cleaned, the entire volume of the adsorber housing being filled with the charge of activated carbon so as to implement the method in accordance with Claim 1, characterised in that the adsorber housing (1) has at least one feed opening (3) with a valve and a plurality of groups of discharge openings (10) are provided, each group consisting of a plurality of discharge openings (10) distributed on a horizontal plane over the circumference of the adsorber housing (1) and the groups being spaced apart vertically, a valve (11ⁿ) being associated with each group of discharge openings (10) and the discharge cross-sectional area of each region being a fractional part of the cross-sectional area of the charge, the ratio being between 1 : 5 and 1 : 20, whereby the through-flow speed along the flow path increases to between five and twenty-times the total cross-section speed.

3. An adsorber in accordance with Claim 2, characterised in that the adsorber housing (1) has the feed opening (3) in its bottom region, and a plurality of discharge openings (10) are provided above the bottom region and are vertically spaced apart, these discharge openings (10) opening out into a common discharge line (5) via controllable valves (11ⁿ).

4. An adsorber in accordance with Claim 2 or 3, characterised in that a plurality of discharge openings (10) distributed over the circumference of the adsorber housing are provided on or in the adsorber housing (1) in horizontal planes located one above the other, and the discharge openings (10) associated with a horizontal plane are connected to the discharge line (5) via a collecting line (12) with valve.

5. An adsorber in accordance with Claim 3 or 4, characterised in that the discharge openings (10) are provided in tubular rings (9ⁿ), and a plurality of tubular rings (9ⁿ) are arranged in the adsorber housing so as to be vertically one above the other and spaced apart.

6. An adsorber in accordance with any one of Claims 2 to 5, characterised in that the discharge openings (10) or tubular rings (9ⁿ) associated with a horizontal plane are at substantially equal distances apart in the vertical direction.

7. An adsorber in accordance with Claim 5, characterised in that the external diameter of the tubular rings (9ⁿ) substantially corresponds to the internal diameter of the adsorber housing (1), and the tubular rings (9ⁿ) are secured to the wall of the adsorber housing.

8. An adsorber in accordance with any one of Claims 2 to 7, characterised in that the valves (11ⁿ, 17) are program-controlled.

9. An adsorber in accordance with any one of Claims 2 to 8, characterised in that a probe measuring the purity of the medium is arranged in the discharge line (5) for the medium, and the probe is located in the control circuit of the valves (11ⁿ, 17).

10. An adsorber in accordance with any one of Claims 2 to 9, characterised in that the height of the successive regions of the charge is a fraction of the diameter of the charge and consequently of the adsorber internal diameter, the ratio of the height of the individual regions to the adsorber internal diameter lying between 1 : 2 and 1 : 5.

11. An adsorber in accordance with any one of Claims 2 to 10, characterised in that the charge rests on a filter plate (8) which is in the form of a perforated plate and is arranged above the feed opening (3) and at a distance therefrom, and the circumferential contour of the filter plate (8) corresponds in size and circumference to the cross-section of the adsorber housing (1).

## Revendications

1. Procédé de fonctionnement d'un dispositif d'adsorption, en particulier d'un dispositif d'adsorption à charbon activé pour l'adsorption sélective de substances dans des solutions aqueuses, notamment pour le traitement des eaux, dans lequel le dispositif d'adsorption présente un boîtier comprenant au moins une ouverture d'admission et au moins une ouverture de décharge pour le milieu à épurer et le boîtier du dispositif d'adsorption reçoit la charge constituée de charbon activé qui occupe tout son volume, caractérisé en ce que le milieu est acheminé, par le côté d'admission du boîtier, à intervalles de temps successifs, à travers des zones de la charge qui se succèdent spatialement à l'intérieur du boîtier dans la direction de passage du milieu et la vitesse d'écoulement du milieu, respectivement, dans les zones spatialement successives individuelles de la charge est augmentée sensiblement en continu entre l'entrée respective dans cette zone et la dérivation de cette zone vers l'extérieur, le milieu étant acheminé à une vitesse sensiblement constante à travers les zones de la charge traversées simultanément, situées en amont de cette dernière zone mentionnée.

2. Dispositif d'adsorption, en particulier dispositif d'adsorption à charbon activé, constitué d'un boîtier (4) comprenant au moins une ouverture d'admission (3) et au moins une ouverture de décharge pour le milieu à épurer, le boîtier du dispositif d'adsorption recevant la charge constituée de charbon activé qui occupe tout son volume pour réaliser le procédé selon la revendication 1, caractérisé en ce que le boîtier (1) du dispositif d'adsorption présente au moins une ouverture d'admission (3) équipée d'une vanne et il est prévu plusieurs groupes d'ouvertures de décharge (10), chaque groupe étant constitué de plusieurs ouvertures de décharge (10) réparties dans un plan horizontal sur la périphérie du boîtier (1) du dispositif d'adsorption et les groupes étant séparés les uns des autres par des intervalles verticaux, une vanne (11ⁿ) étant associée à chaque groupe d'ouvertures de décharge (10) et la surface en section transversale de décharge d'une zone individuelle correspondant à une fraction de la surface en coupe transversale de la charge, le rapport étant compris entre 1:5 et 1:20, si bien que la vitesse de passage le long du trajet de passage augmente à 5 à 20 fois la vitesse de la section transversale entière.

3. Dispositif d'adsorption selon la revendication 2, caractérisé en ce que le boîtier (1) du dispositif d'adsorption présente l'ouverture d'admission (3) dans sa zone de fond et il est prévu, au-dessus de la zone de fond et séparées l'une de l'autre à intervalles verticaux, plusieurs ouvertures de décharge (10) qui débouchent dans une conduite de décharge commune (5) via des vannes commandées (11ⁿ).

4. Dispositif d'adsorption selon la revendication 2 ou 3, caractérisé en ce qu'il est prévu, dans des plans horizontaux superposés sur ou dans le boîtier (1) du dispositif d'adsorption, plusieurs ouvertures de décharge (10) réparties sur la périphérie du boîtier (1) et les ouvertures de décharge (10) associées à un plan horizontal sont connectées à la conduite de décharge (5) via une conduite collectrice (12) équipée d'une vanne.

5. Dispositif d'adsorption selon la revendication 3 ou 4, caractérisé en ce que les ouvertures de décharge (10) sont ménagées dans des anneaux tubulaires (9ⁿ) et plusieurs anneaux tubulaires (9ⁿ) sont agencés dans le boîtier du dispositif d'adsorption, dans la direction verticale, l'un au-dessus de l'autre et à distance l'un de l'autre.

6. Dispositif d'adsorption selon l'une quelconque des revendications 2 à 5, caractérisé en ce que les ouvertures de décharge (10) ou les anneaux tubulaires (9ⁿ) associés à un plan horizontal sont séparés l'un(e) de l'autre à intervalles plus ou moins égaux, dans la direction verticale.

7. Dispositif d'adsorption selon la revendication 5, caractérisé en ce que le diamètre externe des anneaux tubulaires (9ⁿ) correspond approximativement au diamètre interne du boîtier (1) du dispositif d'adsorption et les anneaux tubulaires (9ⁿ) sont fixés sur la paroi du boîtier du dispositif d'adsorption.

8. Dispositif d'adsorption selon l'une quelconque des revendications 2 à 7, caractérisé en ce que les vannes (11ⁿ, 17) sont programmées.

9. Dispositif d'adsorption selon l'une quelconque des revendications 2 à 8, caractérisé en ce que, dans la conduite de décharge (5) pour le milieu, est agencée une sonde mesurant la pureté de celui-ci, ladite sonde étant disposée dans le circuit de commande des vannes (11ⁿ, 17).

10. Dispositif d'adsorption selon l'une quelconque des revendications 2 à 9, caractérisé en ce que la hauteur des zones successives de la charge correspond à une fraction du diamètre de la charge et donc du diamètre interne du dispositif d'adsorption, le rapport entre la hauteur des zones individuelles et le diamètre interne du dispositif d'adsorption étant compris entre 1:2 et 1:5.

11. Dispositif d'adsorption selon l'une quelconque des revendications 2 à 10, caractérisé en ce que la charge s'applique sur un fond de filtrage (8) conformé en tôle perforée, agencée au-dessus de l'ouverture d'admission (3) et à distance de celle-ci, et le contour périphérique du fond de filtrage (8) correspond, en termes de grandeur et de périphérie, à la section transversale du boîtier (1) du dispositif d'adsorption.
